# EUROPEAN PATENT SPECIFICATION

(11) **EP 4 553 055 B1**
(45) Date of publication and mention of the grant of the patent: **28.10.2026**
(21) Application number: 24211404.9
(22) Date of filing: 07.11.2024
(51) Int. Cl.: C04B 28/02, C04B 7/02

(54) **METHOD AND APPARATUS FOR THE PRODUCTION OF CEMENT AND FOR THE PRODUCTION OF A CEMENTITIOUS CONGLOMERATE**
VERFAHREN UND VORRICHTUNG ZUR HERSTELLUNG VON ZEMENT UND ZUR HERSTELLUNG EINES ZEMENTÖSEN KONGLOMERATS
PROCÉDÉ ET APPAREIL POUR LA PRODUCTION DE CIMENT ET POUR LA PRODUCTION D'UN CONGLOMÉRAT CIMENTEUX

(30) Priority: 09.11.2023 IT 202300023661; 09.11.2023 IT 202300023652; 13.06.2024 IT 202400013570
(43) Date of publication of application: 14.05.2025
(73) Proprietor: Tosi, Cesare, 40051 Malalbergo (BO) (IT)
(72) Inventor: Tosi, Cesare, 40051 Malalbergo (BO) (IT)
(74) Representative: Scipioni, Luca

(56) References cited:
- EP-A1- 3 722 269
- CN-A- 104 710 118
- CN-B- 104 446 510

## Description

This invention relates to a method and a plant for the production of cement.

Known in the prior art of the cement production industry are cement production methods which basically comprise three main steps. The first step is homogenization, in which the raw materials are homogenized and mixed with each other to form what in the jargon of the trade is called "flour".

The second step is firing, in which the flour is fired in kilns, usually rotary kilns, to allow different chemical reactions to take place, leading up to the production of the cement base, which, in technical terms, is called "clinker".

The last step is grinding, in which the clinker is mixed with other components and ground to a predetermined particle size.

The clinker is mixed with components, such as fly ash for example, which are highly impactful on the environment, hard to find and very expensive.

In other cases, on the other hand, there are additional components which appreciably reduce the properties of the final cement and which cannot therefore be used in high percentages.

In addition, grinding is a step which generates a lot of heat which is not dispersed and which, in some cases, can have undesirable effects.

Generally speaking, the cement industry is highly impactful on the environment and it is now well known that there is a need to reduce the CO₂ footprint due to the cement production process.

In addition to that, this disclosure relates to cementitious conglomerate, a cementitious composite and a method for preparing a cementitious conglomerate.

In the sector of cementitious conglomerates, it is known that adding water to a cementitious composite which comprises a binder, an aggregate and a filling material allows obtaining a cementitious conglomerate which can be used for building construction, for example to make conglomerates such as concrete or bitumens.

In this sector, it is known that ceramic filling materials, derived, for example, from the processing of tiles, can be used. A document which describes such a solution is document EP3722269A1.

It is thus known, in generic terms, that powders derived from the processing of ceramic tiles can be used and are normally collected by dispersion in water to form return sludges containing these ceramic powders.

Document EP3722269A1 teaches drying the sludges of this kind to obtain the powders, hence the conglomerate filling material which must have a very small particle size to be able to fulfil its function as filler.

This solution, however, has several disadvantages: first of all, the energy expenditure needed to obtain the dry powder from the sludge, which requires specific thermal conditioning. Moreover, the drying process (performed in different stages) is a lengthy one.

Other solutions are known in the field and are listed here: CN111018375, CN104446510B and the article of Francis Kenna "Ceramic Waste Sludge as a partial Cement Replacement" with the number XP93155446.

The aim of this disclosure is to provide a method and a plant for the production of cement to overcome the above-mentioned problems of the prior art. This disclosure also has for an aim to provide a method and a related apparatus for the production of a cementitious conglomerate.

This aim is fully achieved, according to this disclosure, by the method and apparatus for the production of cement and by the method and apparatus for the production of a cementitious conglomerate, as characterized in the appended claims.

According to an aspect of it, this disclosure provides a method for the production of cement.

The method comprises a step of mixing a combination of raw materials. Preferably, the raw materials are calcium carbonate and clay, used for the production of Portland cement, but other raw materials could be used for other kinds of cement.

The step of mixing is carried out in a homogenizer and allows forming a first mixed composite.

The method comprises a step of firing the first mixed composite in a kiln to form a base of the cement. In the case of Portland cement, the base of the cement is commonly known as "clinker".

The method comprises a step of feeding the base into a grinding mill.

The method comprises a step of adding (mixing) a primary additional component, based on calcium, (preferably calcium sulphate) into the base. The primary additional component is commonly gypsum, which is used to control setting properties.

The method comprises a step of adding (mixing) a secondary additional component into the base. In an embodiment, the primary additional component and the secondary additional component are mixed into the base in the grinding mill to allow grinding them to a predetermined particle size.

In an embodiment, additives are also added to the grinding mill as grinding aids to facilitate grinding.

The method comprises a step of grinding the base, the primary additional component and the secondary additional component to a predetermined particle size to form the cement.

Advantageously, the secondary additional component comprises ceramic material derived from the processing of ceramic tiles.

Preferably, the ceramic material is derived from the processing of ceramic stoneware tiles.

In an embodiment having specific advantages, the secondary additional component is at least partly fed in the form of return sludge having a predetermined moisture content and in which the ceramic material is dispersed.

According to an aspect of this disclosure, the ceramic material is derived from products which have to be recycled, such as, for example, ceramic (preferably stoneware) tiles. The ceramic tiles may be:
a) tiles which have previously been laid but are no longer in use;
b) tiles which have never been laid and were rejected during the ceramic production process because they did not meet quality requirements.

Based on the above embodiment, the recycled material must be treated, where necessary. For example, if the material has previously been used, the tiles must be treated to remove the additive present, for example, the glue used to lay the tiles.

This embodiment offers an important advantage both in terms of efficient reuse and in terms of efficiency of the cement production process. In effect, direct use of the sludge allows reuse without processing the waste (sludge), hence with zero energy expenditure. Furthermore, using the sludge with the moisture it contains, allows cooling the grinding mill and prevents the grinding mill from reaching temperatures which could lead to unwanted effects on the cement.

In an embodiment, the predetermined moisture content is less than 40%.

In effect, this moisture content allows preventing the problems caused by clumping which reduce grinding efficiency during the grinding process.

Preferably, the moisture content is in a range between 5% and 20%.

It is specified that this percentage of moisture refers to the quantity of water per unit volume. In other words, a unit volume of sludge contains that percentage of water.

It is stressed that mixing the wet sludge with the clinker avoids the problem of cement setting because, in practice, the size of the clinker is such as not to produce this type of reaction with the water. In effect, the sludge is mixed during a step of grinding the clinker, when its particle size is such as not to initiate the setting process (before grinding the clinker, it is common practice to store it outdoors, even when it rains). The heat produced during grinding has the effect of dehydrating the sludge and, after grinding, there is no longer any component which can react with the clinker.

This range of values offers the best compromise between cooling the grinder and reducing the probability of clumping.

The method comprises a step of regulating the moisture in the return sludge to obtain the predetermined moisture content starting from a return moisture content.

This allows using any type of sludge, adapting it to the requirements of the method and thus increasing the possibility of waste recycling.

In an embodiment of the method, the step of regulating comprises a step of adding dry ceramic material to the return sludge.

The step of regulating comprises a step of mixing the return sludge with the dry ceramic material to reduce the moisture content of the return sludge to the predetermined moisture content.

This allows obtaining the required humidity in a controlled, non-energy intensive manner and using other waste material.

In other embodiments, which may be combined with the preceding one, the step of regulating comprises a step of removing water from the return sludge. For example, such a step of removing water is performed through one or more of the following steps:
- drying the return sludge by exposure to open air;
- drying the return sludge by exposure to controlled ventilation;
- drying the return sludge by exposure to controlled temperature;
- filtering the return sludge;
- filter pressing the return sludge.

It should be noted that combining the correcting actions of adding dry ceramic material and removing water from the excessively wet sludge may be an important technical compromise, above all in those cases where the sludge is very wet and too much dry material would be needed to correct it, especially in light of the fact that the dry ceramic material is generally less readily available as waste compared to the sludge.

Thus, in an embodiment, the secondary additional component is at least partly fed in the form of dry ceramic material.

In an embodiment, the method comprises a step of providing a secondary additional component in the form of dry ceramic material. The method comprises a step of providing a secondary additional component in the form of return sludge having a return moisture content.

The method comprises a step of detecting the return moisture content via a moisture sensor.

The method comprises a step of determining a corrective quantity of dry ceramic material to be added to the return sludge to reduce the return moisture content to a predetermined moisture content.

The method comprises a step of feeding the corrective quantity of dry ceramic material and the return sludge into a mixer to obtain return sludge having the predetermined moisture content.

This fine tuned adjustment of the moisture content enhances process control over the cement production process, preventing the problem of variable moisture in the cement leaving the grinding mill.

According to an aspect of it, this disclosure provides a cement. The cement comprises a base. In the case of Portland cement, the base is clinker.

The cement comprises a primary additional component, based on calcium (preferably calcium sulphate). The primary additional component is preferably gypsum.

The cement comprises a secondary additional component. Advantageously, the secondary additional component comprises ceramic material derived from the processing of ceramic tiles.

According to an aspect of it, this disclosure provides an apparatus for the production of cement.

The apparatus comprises a homogenizer, configured for mixing a combination of raw materials, preferably calcium carbonate and clay, to form a first mixed composite.

The apparatus comprises a kiln configured for firing the first mixed composite to form a base of the cement.

The apparatus comprises a grinding mill, configured to be fed with the base, a primary additional component based on calcium (preferably calcium sulphate) and a secondary additional component.

The apparatus comprises a storage unit. The storage unit contains ceramic material derived from the processing of ceramic tiles. The ceramic material is added in the form of return sludge and/or dry ceramic material. The ceramic material is used as at least part of the secondary additional component.

In an embodiment, the storage unit comprises a first container, configured to contain return sludge.

The storage unit comprises a second container configured to contain dry ceramic material.

The storage unit comprises a mixer, configured to receive return sludge and dry ceramic material and mix them therein.

Additionally, in an embodiment, the apparatus comprises a moisture sensor, configured to detect the moisture of the return sludge in the first container and to generate a moisture signal.

The apparatus comprises an extractor, configured for extracting dry ceramic material from the second container and sending it to the mixer.

The apparatus comprises a pump configured for pumping a quantity of return sludge from the first container to the mixer.

In an embodiment, the apparatus comprises a control unit.

The control unit is configured for calculating a quantity of corrective ceramic material, based on the quantity of return sludge pumped into the mixer and on the moisture signal.

The control unit is configured for generating a command signal, representing the quantity of corrective ceramic material.

The control unit is configured for sending the command signal to the extractor, to instruct it to feed the mixer with the quantity of corrective ceramic material.

In an embodiment, the apparatus comprises a dryer, configured for reducing the percentage of water in the return sludge. The dryer may comprise a thermal conditioning system to condition the temperature of the return sludge and/or a fan to ventilate the sludge to allow it to dry more quickly.

In an embodiment, the apparatus comprises a drying zone, in which the return sludge is placed to allow natural drying to reduce the percentage of water in the return sludge.

According to an aspect of it, this disclosure is also intended to protect the use of a ceramic material derived from the processing of ceramic (preferably stoneware) tiles as an additional component in the cement.

It is noted that the term "ceramic material", whether dry or wet, as used in this disclosure, means ceramic material of all particle sizes, be it (dry) ceramic powder or aggregate of larger size or even very large pieces of waste material which is ground down to the predetermined particle size in the grinding mill.

According to an aspect of it, this disclosure provides a cementitious conglomerate for building construction (preferably civil building construction).

The cementitious conglomerate comprises mixing water.

The cementitious conglomerate comprises a binder configured to bind to the mixing water.

In an embodiment, the conglomerate is a cementitious conglomerate such as concrete or cement mortar. In this embodiment, the binder is a cement configured to bind to water.

In another possible embodiment, the binder is bitumen. In the case where the binder is bitumen, the conglomerate for building construction is asphalt.

Preferably, the cementitious conglomerate comprises an aggregate. The aggregate comprises a plurality of aggregate particles of a first material.

The aggregate comprises a filling material comprising a plurality of filler particles. The plurality of filler particles is preferably made of ceramic material.

The plurality of aggregate particles has an average particle size that is greater than the average particle size of the filler particles.

In a particularly advantageous embodiment, the filling material is a sludge comprising the plurality of filler particles and return water. It is specified that the return water is water derived from a certain degree of moisture of the sludge.

Direct use of the sludge in the cementitious conglomerate offers important advantages in terms of rapidity of sludge reuse, cost-effectiveness of the process and reduced environmental impact. In effect, instead of drying the sludge only to hydrate it again in the cementitious conglomerate, the return water from the sludge is used as part of the mixing water, thus making it possible not only to reduce the time needed to process the waste (the sludge) but also the amount of water required for preparing the conglomerate, with a twofold advantage.

Preferably, the plurality of filler particles is made of stoneware. This ensures a good supply of filling material, since stoneware is widely used in the tile industry.

Preferably, the first material is also ceramic material. For example, the particles of the plurality of aggregate particles comprise comminuted tiles or semifinished tile products. That means having a product which further reduces the environmental impact.

In a preferred embodiment, the particles of the plurality of filler particles consist of powders derived from the processing of ceramic tiles or semifinished ceramic tile products.

In a preferred embodiment, the filling material is derived from return sludge derived from the processing of ceramic tiles or semifinished ceramic tile products.

According to an aspect of it, this disclosure provides a cementitious composite to be premixed before use in a cementitious conglomerate for building construction.

The cementitious composite comprises a binder configured to bind to the mixing water.

The cementitious composite comprises a filling material comprising a plurality of filler particles. The plurality of filler particles is preferably made of ceramic material. The plurality of filler particles has an average particle size of less than 1.5 mm.

More in detail, the particles of the plurality of filler particles have a particle size such that 50% of the particles can pass through a screen with 0.5 mm apertures. Still more advantageously, for even better performance, the particles of the plurality of filler particles have a particle size such that 80% of the particles can pass through a screen with 0.3 mm apertures.

Lastly, in a particularly high-performing embodiment, the particles of the plurality of filler particles have a particle size such that 90% of the particles can pass through a screen with 0.1 mm apertures.

In a particularly advantageous embodiment, the filling material is a sludge comprising the plurality of filler particles and return water.

In an embodiment, the cementitious composite comprises an aggregate. The aggregate comprises a plurality of aggregate particles of a first material. However, for the production of cementitious mortar, the cementitious conglomerate might also not comprise aggregates.

In an embodiment, the conglomerate comprises a plurality of additives, configured to reduce the quantity of mixing water. The quantity of mixing water is calculated on the basis of a moisture content of the filling material and/or of the quantity of additives present in the conglomerate. For exemplary purposes only, the additive may belong to the family of polycarboxylates.

According to an aspect of it, this disclosure provides a container for a cementitious composite to be premixed before use in the production of a cementitious conglomerate.

It is stressed that the term "container" is used herein in a very broad, generic sense, that is to say, including bags, containers, silos or anything else capable of holding solids and/or liquids. Preferably, the container is transportable.

The container comprises a first casing having a first containing space in which there is a binder which is configured to bind to mixing water. The first casing might, where necessary, also contain the aggregate (that is to say, the plurality of aggregate particles which in any case do not activate the binding properties of the binder).

The container comprises a second casing having a second containing space in which there is a filling sludge comprising a plurality of filler particles, made of ceramic material and having a particle size such that 50% of the particles can pass through a screen with 0.5 mm apertures (or such that 80% of the particles can pass through a screen with 0.3 mm apertures, or such that 90% of the particles can pass through a screen with 0.1 mm apertures) and return water.

Advantageously, the first containing space is hydraulically isolated from the second containing space to prevent undesirable contact between the binder and the return water.

This allows the sludge to be transported safely and mixed with the other parts of the cementitious composite only when it is time to make the cementitious conglomerate by adding mixing water. In an embodiment, the container might comprise a silo, for storing the sludge, and a mixing bay, for storing the powders (binder and aggregates). When it is time to prepare the conglomerate, the contents of the silo are poured into the container so as to initiate hydration of the cementitious composite contained in the mixing bay. An embodiment is described in more detail below, with reference to an apparatus for making a cementitious conglomerate.

According to an aspect of it, this disclosure is also intended to protect the use of a filling sludge comprising a plurality of filler particles, made of ceramic material and having a particle size such that 50% of the particles can pass through a screen with 0.5 mm apertures (such that 80% of the particles can pass through a screen with 0.3 mm apertures, or such that 90% of the particles can pass through a screen with 0.1 mm apertures) and return water in (the preparation of) a cementitious conglomerate.

According to an aspect of it, this disclosure provides an apparatus for mixing concrete.

The apparatus for mixing concrete comprises a mixing zone in which mixing water, a hydraulic binder, an aggregate including a plurality of aggregate particles having a first average particle size, and a filling sludge including a plurality of filler particles made of ceramic material and having a second average particle size, less than the first particle size, can be mixed.

The mixing zone may be a rotary concrete mixer.

The apparatus comprises a mixing actuator, configured for moving the mixing zone. For example, the mixing actuator may be a motor for driving the rotary concrete mixer in rotation or a rotary mixer which rotates inside the concrete mixer.

Alternatively, the mixing actuator might be a group of mixing actuators which mix the contents in a mixing tank.

The apparatus comprises a delivery mouth, configured to allow the cementitious conglomerate to be delivered from the mixing zone.

The apparatus comprises a feed mouth, configured to allow the binder, the mixing water, the aggregate and the filling material to be fed into the mixing zone.

Advantageously, the apparatus comprises a sensor, configured to detect a moisture signal, representing a quantity of return water contained in the filling sludge.

In an embodiment, the apparatus comprises a silo, for the storage of the filling sludge. The silo is connected to the mixing zone by a feeding duct. In an embodiment, the sensor is located in the feeding duct to determine the percentage of water in the sludge.

In an embodiment, the apparatus comprises a control unit, configured for determining the quantity of mixing water based on the moisture signal detected.

The apparatus comprises a pump for delivering mixing water. The control unit is configured to control the pump so that it delivers the correct quantity of mixing water, calculated on the basis of the moisture signal.

In an embodiment, the apparatus comprises an additive container, containing additives which are configured to reduce the quantity of mixing water. The control unit is configured for determining the quantity of mixing water based on the moisture signal and/or on the quantity of additives present in the conglomerate.

According to an aspect of it, this disclosure provides a method for preparing a cementitious conglomerate.

The method comprises a step of calculating a quantity of mixing water.

The method comprises a step of combining mixing water and a binder which binds to the mixing water.

The method preferably comprises a step of adding an aggregate comprising a plurality of aggregate particles of a first material.

The method comprises a step of adding a filling sludge comprising a plurality of filler particles (preferably) made of ceramic material and return water.

The plurality of aggregate particles has an average particle size that is greater than the average particle size of the filler particles.

Advantageously, calculating the quantity of mixing water is carried out on the basis of a quantity of return water contained in the filling sludge.

In an embodiment, the method comprises a step of detecting a quantity of return water in the filling sludge by means of a sensor.

Calculating the quantity of mixing water is carried out on the basis of a quantity of return water determined by the sensor.

In an embodiment, the method comprises a step of adding additives to reduce the quantity of mixing water. In this embodiment, calculating the quantity of mixing water is carried out on the basis of a quantity of return water contained in the filling sludge and/or on the basis of the quantity of additives added.

These and other features are more apparent from the following description of a preferred embodiment, illustrated by way of non-limiting example in the accompanying drawings, in which:

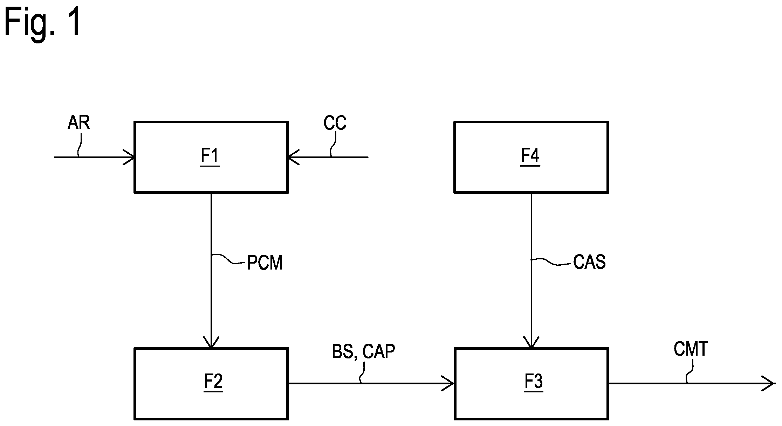

- Figure 1 is a schematic diagram representing a method for the production of cement according to this disclosure;

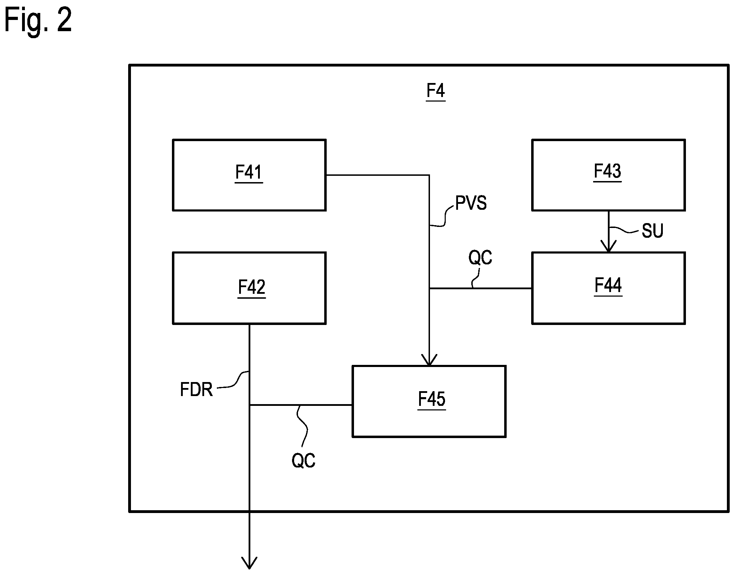

- Figure 2 is a schematic diagram representing a step of regulating the moisture of a secondary additional component;

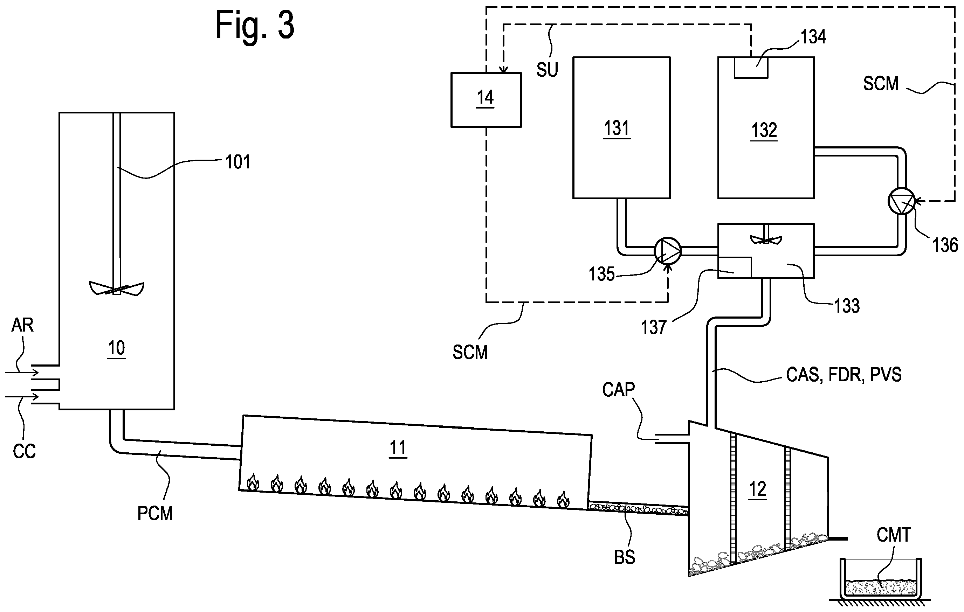

- Figure 3 schematically represents a cement production plant according to this disclosure;

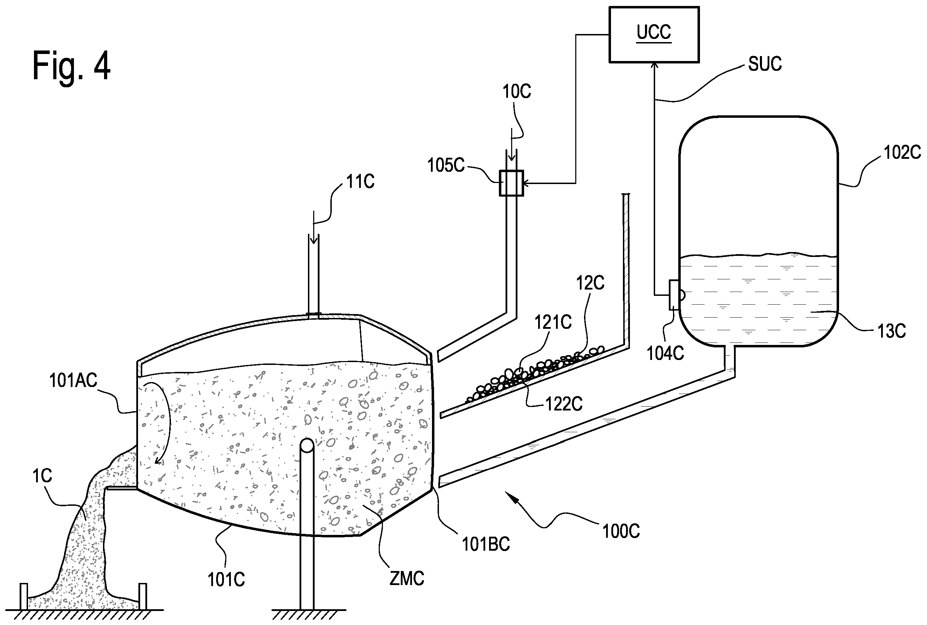

- Figure 4 schematically represents a cementitious conglomerate according to this disclosure in an apparatus for making the cementitious conglomerate;

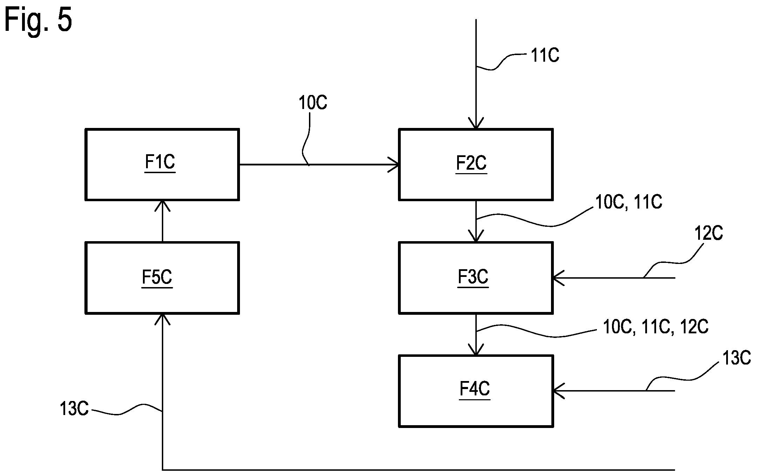

- Figure 5 is schematic block diagram representing the production of a cementitious conglomerate;

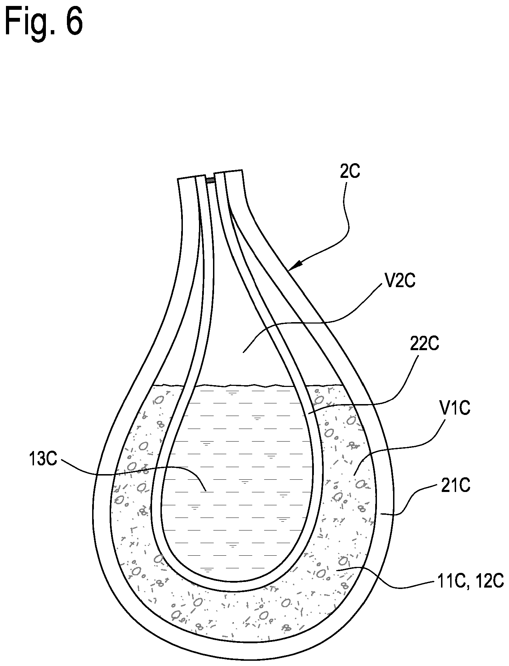

- Figure 6 schematically illustrates a container for containing a cementitious composite to be premixed before use in the production of a cementitious conglomerate.

With reference to the accompanying drawings, the letter M denotes a method for the production of cement.

The method comprises a step of mixing F1 calcium carbonate CC and clay AR in a homogenizer 10 to form a first mixed composite PCM.

The step of mixing F1 involves feeding pieces of wet clay AR and calcium carbonate CC which, after being mixed, produce what in the jargon of the trade is called "flour", that is to say, the first mixed composite PCM.

The method comprises a step of firing F2 the first mixed composite in a kiln 11 to form a base BS for the cement. In Portland cements, the base BS is a clinker in which the first mixed composite PCM undergoes several chemical reactions on account of the high temperature in the kiln 11.

The method comprises feeding the base BS into a grinding mill 12.

The method comprises a step of feeding a primary additional component CAP, based on calcium sulphate, into the mill 12. This step is preferably a step of adding gypsum CAP.

The method comprises a step of feeding a secondary additional component CAS into the mill 12.

In this step, the method M comprises using, as secondary additional component CAS, ceramic powders derived from the processing of ceramic tiles, preferably stoneware tiles. In effect, during ceramic processing, grinding and other mechanical machining processes which produce very fine ceramic powder are commonplace. Thus, its particle size is particularly suitable for use as secondary additional component CAS in cements.

According to an aspect of the method, the secondary additional component CAS may be in the form of dry powder PVS or in the form of return sludge FDR. In effect, in tile production processes, two systems for obtaining the powder to be recycled are known. According to a first method, the powder is collected by suction through specific extractors, which thus allow recovering the dry powder PVS. According to a second method, which is easier and more practical, the powder is sprayed with water (preferably nebulized), thus producing return sludge FDR having a certain degree of moisture.

For the return sludge FDR to be suitable for direct use as secondary additional component CAS, it should preferably have a moisture content of less than 40%, preferably between 5% and 20%.

Since the return sludge is obviously not subjected to moisture control, its final moisture content cannot be known (because it is a product returned for recycling). Therefore, to be able to include adequate process control in the cement production method, it is of fundamental importance to be able to control the moisture content of the sludge fed into the grinding mill 12. For this purpose, the method comprises a step of regulating F4 the moisture content of the return sludge FDR to bring it to a predetermined moisture content value for the production process of the cement CMT.

This step of regulating may be carried out in different ways, all of which fall within the scope of this disclosure, as specified in the foregoing.

By way of non-limiting example, one way that could be used is to add dry powder PVS to the return sludge FDR until the sludge has the required moisture content.

For this purpose, the step of regulating F4 comprises a step of providing (or storing) F41 dry powder PVS.

The step of regulating F4 comprises a step of providing (storing) F42 return sludge FDDR having a return moisture content UDR.

The step of regulating F4 comprises a step of detecting F43 the return moisture content UDR via a moisture sensor 134.

The step of regulating F4 comprises a step of determining F44 a corrective quantity QC of dry powder PVS to be added to the return sludge FDR to reduce the return moisture content UDR to a predetermined moisture content.

The step of regulating F4 comprises a step of feeding F45 the corrective quantity QC of dry powder PVS and the return sludge FDR into a mixer to obtain return sludge FDR having the predetermined moisture content.

This therefore allows having return sludge FDR with the exact moisture content, without further energy expenditure, by simply mixing two return products derived from the processing of tiles, with evident advantages for the environment and reuse.

Obviously, dry powder PVS can be used directly as secondary additional component CAS without the need to control its moisture content. However, the use of sludge having a controlled moisture content allows automatically cooling the grinding mill and recovering the waste in each of its forms.

The method comprises a step of grinding F3 the base BS, the primary additional component CAP and the secondary additional component CAS to a predetermined particle size to form the cement CMT.

With reference to the accompanying drawings, the numeral 100 denotes an apparatus for the production of cement CMT.

The apparatus 100 comprises a homogenizer 10 into which clay AR and calcium carbonate CC are fed. The homogenizer 10 comprises a homogenizing mechanism 101, for example, a mixing screw or a rotary blade which, by rotating, homogenizes the calcium carbonate CC and the clay AR to create the first premixed composite PCM, ready for firing.

The apparatus 100 comprises a kiln 11. The kiln 11 is preferably a rotary kiln. The kiln 11 is a rotary kiln whose inclination relative to a horizontal plane perpendicular to the weight force is such that the first premixed composite PCM can flow progressively from the inlet to the outlet of the kiln. Preferably, the kiln 11 is a countercurrent flow kiln, that is to say, a kiln in which the first premixed composite PCM advances in a direction that is the opposite of the direction of the flow of the hot air in the kiln 11.

The first premixed composite PCM is thus fired at temperatures which allow chemical reactions in the clay AR and the calcium carbonate CC such as to produce what is known in the jargon of the trade as "clinker", that is to say base BS for the Portland cement.

To make the cement CMT, after producing the clinker, it is necessary to mix the clinker with additional components, in particular primary additional components CAP (normally gypsum) and secondary additional components CAS.

For this purpose, the apparatus 100 comprises a grinding mill 12. The grinding mill 12 is preferably a ball mill, in which the tumbling action of the balls causes them to impact and crush the clinker, the gypsum and the secondary additional component CAS.

The grinding mill 12 thus contains the clinker, the gypsum and the secondary additional component CAS, which, in accordance with this invention, may be dry powder PVS or return sludge FDR, both including ceramic particles derived from the processing of ceramic tiles.

The percentage of primary additional components CAP and secondary additional components CAS is determined on the basis of the type of cement to be made, according to normative tables, where the known types of secondary additional components can be replaced with the ceramic powder, obtaining the important advantages set out in the foregoing.

In order to control the properties of the secondary additional component CAS, the apparatus 100 comprises a regulating unit 13, configured to allow regulating and controlling the moisture of the return sludge and/or regulating and controlling the quantity of secondary additional component CAS to be fed into the mill 12.

Specifically, the regulating unit 13 comprises a first container 131 configured to store dry powder PVS. The regulating unit 13 comprises a second container 132 configured to store return sludge FDR.

The regulating unit 13 comprises a mixer 133, configured to receive dry powder PVS from the first container 131 and return sludge FDR from the second container 132. In the mixer 133, the dry powder PVS is mixed into the return sludge FDR to allow reducing the moisture content of the sludge.

The regulating unit 13 comprises a sensor 134, configured to detect a moisture signal SU, representing a return moisture content of the return sludge FDR in the second container 132.

The apparatus 100 comprises a control unit 14, configured to control components and actuators of the apparatus 100. The sensor 134 is connected to the control unit 14 to send it the moisture signal SU.

The regulating unit 13 comprises an extractor 135, configured to extract dry powder PVS from the first container 131 and to convey it to the mixer 133. The regulating unit 13 comprises a pump 136 for pumping the return sludge FDR from the second container 132 to the mixer 133.

The control unit 14 is programmed, based on the moisture signal SU, to calculate a correct quantity of dry powder PVS and return sludge FDR to be fed into the mixer 133 so as to regulate the moisture content in the return sludge FDR until obtaining a predetermined value (that is to say, a design value of moisture content for the method for the production of the cement CMT).

In an embodiment, the control unit 14 commands the extractor 135 and the pump 136 to pump a correct quantity of dry powder PVS and return sludge FDR into the mixer 133 so that, after they have been mixed together, the moisture content of the return sludge is equal to the predetermined value (that is to say, the design value of moisture content for the method for the production of the cement CMT).

In an embodiment, the regulating unit 13 comprises a control sensor 137, configured to measure the moisture in the return sludge FDR after mixing in the mixer 133, so as to have a control parameter for the moisture that is going into the grinding mill 12.

In an embodiment, the control sensor 137 is configured to measure the moisture in the return sludge FDR during mixing in the mixer 133, to send a transfer signal, identifying when the moisture in the return sludge FDR inside the mixer 133 reaches the predetermined moisture content (obviously with a certain, predetermined degree of tolerance).

With reference to the accompanying drawings, the reference label 1C denotes a cementitious conglomerate for building construction (preferably civil building construction).

The cementitious conglomerate 1C comprises mixing water 10C.

The cementitious conglomerate comprises a binder 11C configured to bind to the mixing water 10C.

In an embodiment, the conglomerate 1C is a cementitious conglomerate such as concrete or cement mortar. In this embodiment, the binder 11C is a cement configured to bind to the water 10C.

In another possible embodiment, the binder 11C is bitumen. In the case where the binder 11C is bitumen, the conglomerate 1C for building construction is asphalt.

Preferably, the cementitious conglomerate 1C comprises an aggregate 12C. The aggregate 12C comprises a plurality of aggregate particles of a first material. The first material is a ceramic material. The aggregate is preferably an inert material.

In an embodiment, the inert material 12C includes fired ceramic material. In an embodiment, the inert material 12C includes stoneware. In an embodiment, the inert material 12C includes fired ceramic material derived from ceramic tiles. In an embodiment, the inert material 12C includes fired ceramic material derived from ceramic stoneware tiles.

In an embodiment, the plurality of aggregate particles includes a first group of aggregate particles 121C and a second group of aggregate particles 122C.

The first group of aggregate particles 121C forms a sand. In an embodiment, the first group of aggregate particles 121C forms a ceramic sand.

In an embodiment, the first group of aggregate particles 121C may be characterized by one or more of the following parameters:
- particle size (denoted in this disclosure also by the term "first particle size") less than 6 mm;
- equivalent sand value greater than 70%;
- density equal to 2.35 SSA;
- water absorption equal to 0.98%;
- BLUE value (methylene blue test to determine the clay content) less than 0.3 g/kg or less than 0.4 g/kg or less than 0.6 g/kg;
- sulphate value less than 0.02%;
- passing fraction at 63 µm less than 4% or less than 3%.

In an embodiment, the second group of aggregate particles may be characterized by one or more of the following parameters:
- particle size (denoted in this disclosure also by the term "second article size") between 6 and 16 mm;
- density equal to 2.34 SSA;
- water absorption equal to 0.72%;
- sulphate value less than 0.02%;
- flakiness coefficient FI (933-3) equal to 16 or less than 20;
- shape index SI (933-4) equal to 9 or less than 20;
- Los Angeles (LA) coefficient, or fragmentation test, less than or equal to 30.

For further specifications on the definition of the above mentioned parameters, for their measurement on samples, for the conditions under which the measurements are performed and for the units of measurement involved, express reference is made to the standards below.

Below are the normative references with regard to the parameters of the aggregate material:
- determination of particle size distribution (UNI EN 933-1);
- determination of particle density (UNI EN 1097-6);
- determination of water absorption (UNI EN 1097-6);
- fines quality assessment - sand equivalent test (UNI EN 933-8);
- fines quality assessment - methylene blue test (UNI EN 933-9);
- determination of particle shape - flakiness index (UNI EN 933-3);
- determination of particle shape - shape index (UNI EN 933-4);
- determination of resistance to fragmentation through the Los Angeles test method (UNI EN 1097-2);
- determination of water-soluble chlorides (UNI EN 1744-1). In an embodiment, the percentage of water-soluble chlorides is less than or equal to 0.01%.
- determination of acid soluble sulphates (UNI EN 1744-1);
- determination of resistance to freezing and thawing (UNI EN 1367-1).

In an embodiment, 100% of the aggregate particles of the first group of aggregate particles 121C pass through a 4 mm diameter sieve or a 6 mm diameter sieve.

In an embodiment, the percentage of particles of the first group of aggregate particles 121C that pass through a 4 mm sieve is greater than 85%.

In an embodiment, the percentage of particles of the second group of aggregate particles 122C that pass through a 16 mm sieve is 100%. In an embodiment, the percentage of particles of the second group of aggregate particles 122C that pass through an 8 mm sieve is greater than 80%. In an embodiment, the percentage of particles of the second group of aggregate particles 122C that pass through a 6 mm sieve is 0%.

The conglomerate 1C comprises a filling material 13C comprising a plurality of filler particles. The plurality of filler particles is preferably made of ceramic material. The plurality of filler particles is preferably made of fired ceramic tiles, or stoneware tiles.

The plurality of aggregate particles 12C has an average particle size that is greater than the average particle size of the filler particles 13C (that is to say, of the inert material 13C).

In a particularly advantageous embodiment, the filling material 13C is a sludge material 13C comprising the plurality of filler particles and return water.

More specifically, the filling material 13C (the plurality of filler particles has a particle size preferably less than 0.063 mm: that is, it passes through a 0.063 mm sieve.

The particle size requirements for the filling material 131C, defined by UNI EN 12620, are the following:
- percentage that passes through a 2 mm sieve is 100%: that is to say, none of the particles of the filling material 13C is larger than 2 mm in size;
- percentage that passes through a 0.125 mm sieve is greater than 85%: that is to say, 85% of the particles of the filling material 13C is smaller than 0.125 mm in size;
- percentage that passes through a 0.063 mm sieve is greater than 70%: that is to say, 70% of the particles of the filling material 13C is smaller than 0.063 mm in size.

Besides the foregoing definition, this disclosure provides a solution where, in the granulometric curve of the filling material, the percentage of the filling material that passes through a 1.5 mm sieve is 100%. Further, the percentage of particles smaller than 0.063 mm in size is between 60% and 95%, preferably between 75% and 90%.

In an embodiment of this invention, the filling material 13C has one or more of the following properties:
- Water absorption values between 0.4 - 0.7%, according to the test requirements set out in EN 1097-6; the absorption values are very low and the porosity considerably reduced;
- Los-Angeles values L.A.21, according to the test requirements set out in EN 1097-2, for assessing the strength and hardness of the material;
- Density, excluding porosity, equal to 2.552 Mg/m³, according to the test requirements set out in EN 196-6;
- Specific surface area of the filling material, determined according to UNI EN 196-6, lies in the interval between 3000 and 7000 cm²/g: for example (and preferably) it is 5114 cm²/g.
- Residual moisture of the filling material in the final product MUST be less than or equal to 0.02%.

The filling material 13 according to this disclosure shows a latent hydraulicity which the filler material 13 shows in combination with hydraulic binders.

In a preferred embodiment, the particles of the plurality of filler particles consist of powders derived from the processing of ceramic tiles or semifinished ceramic tile products.

Preferably, the particles of the plurality of filler particles have a particle size such that 50% of the particles can pass through a screen with 0.5 mm apertures. Still more advantageously, for even better performance, the particles of the plurality of filler particles have a particle size such that 80% of the particles can pass through a screen with 0.3 mm apertures.

Lastly, in a particularly high-performing embodiment, the particles of the plurality of filler particles have a particle size such that 90% of the particles can pass through a screen with 0.1 mm apertures.

According to an aspect of it, this disclosure provides even just one cementitious composite 1C' for building construction, to be premixed before use in the production of a cementitious conglomerate, which is substantially only a material comprising only the binder 10C and the filling material 13C. Furthermore, the inert material, 13C (that is to say, the aggregate 13C) may also be added to this composite.

According to an aspect of it, this disclosure provides a container 2C for a cementitious composite 1C' to be premixed before use in the production of a cementitious conglomerate.

Preferably, the container is transportable.

The container 2C comprises a first casing 21C having a first containing space V1C in which there is a binder 11C which is configured to bind to mixing water 10C. The first casing 21C might, where necessary, also contain the aggregate (that is to say, the plurality of aggregate particles which in any case do not activate the binding properties of the binder).

The container 2C comprises a second casing 22C, having a second containing space V2C in which there is a filling sludge.

More in detail, the container 2C is a containing bag which comprises, inside it, a first pouch 21C and a second pouch 22C. The first pouch comprises the binder 11C and, if necessary, the aggregates), while the second pouch 22C comprises the filling sludge 13C. The first and second pouches 21C, 22C are separate so the filling sludge (which contains water) cannot come into contact with, and activate, the binder 11C.

In other words, the first containing space 21C s hydraulically isolated from the second containing space 22C to prevent undesirable contact between the binder 11C and the return water.

With reference to the accompanying drawings, the reference label 100C denotes an apparatus for mixing concrete, or a cementitious conglomerate.

The concrete mixing apparatus 100C comprises a mixing zone ZMC in which mixing water 10C, a hydraulic binder 11C, an aggregate 12C and a filling sludge 13C can be mixed.

The mixing zone ZMC comprises, for example, a rotary concrete mixer 101C.

The apparatus 100C comprises a mixing actuator 102C, configured to move the concrete mixer 101C. For example, the mixing actuator 102C may be a motor for driving the rotary concrete mixer in rotation or a rotary mixer 101C which rotates inside the concrete mixer.

The apparatus comprises a delivery mouth 101AC, configured to allow the cementitious conglomerate 1C to be delivered from the mixing zone.

The apparatus 100C comprises a feed mouth 101BC through which the mixing water 10C, the hydraulic binder 11C, the aggregate 12C and the filling sludge 13C are fed.

In an embodiment, the apparatus 100C comprises a silo 102C, configured to contain the filling sludge 13C. The silo 102C is preferably connected to the concrete mixer 101C by a feeding duct 102AC to allow feeding the filling sludge 13C.

The apparatus 100C preferably comprises a control unit UCC, configured to manage the feeding of the binder 1C, the mixing water 10C, the aggregate 12C and/or the filling material 13C.

Advantageously, the apparatus 100C comprises a sensor 104C. The sensor 104C is configured to detect a moisture signal SUC, representing a quantity of return water contained in the filling sludge 13C. In other embodiments, the sensor 104C is configured to detect the quantity of ceramic powder in the return water.

Thus, irrespective of the type of sensor 104C, once the signal has been detected, the control unit UCC knows the quantity of ceramic powder (thus, of dry filling material 13C) and the quantity of return water.

The sensor 104C may be mounted inside the silo 102C or on the feeding duct 102AC.

Based on the signal received from the sensor 104C, the control unit UCC is configured to derive a quantity of mixing water 10C necessary (which must be delivered) for the sum of waste water plus mixing water 10C to be substantially equal to the total quantity of water necessary for activating the binder 11C, that is to say, for making the cementitious conglomerate 1C.

The apparatus 100C comprises a pump 105C for delivering mixing water 10C. The control unit UCC is configured to control the pump 105C so that it delivers the correct quantity of mixing water 10C, calculated on the basis of the moisture signal detected by the sensor 104C.

According to an aspect of it, this disclosure provides a method for preparing a cementitious conglomerate 1C.

The method comprises a step of calculating F1C a quantity of mixing water 10C.

The method comprises a step of combining F2C mixing water 10C and a binder 11C, which binds to the mixing water 10C.

The method preferably comprises a step of adding F3C an aggregate 12C comprising a plurality of aggregate particles 121C, 122C of a first material. The method comprises a step of adding F4C a filling sludge 13C comprising a plurality of filler particles (preferably) made of ceramic material and return water.

Advantageously, the step of calculating F1C the quantity of mixing water is carried out on the basis of a quantity of return water contained in the filling sludge 13C.

In an embodiment, the method comprises a step of detecting F5C a quantity of return water in the filling sludge 13C by means of a sensor 104C.

Calculating F1C the quantity of mixing water is carried out on the basis of a quantity of return water determined by the sensor 104C.

## Claims

1. A method (M) for the production of cement (CMT), comprising the following steps:
- mixing (F1) raw materials in a homogenizer (10) to form a first mixed composite (PCM);
- firing (F2) the first mixed composite (PCM) in a kiln (11) to form a base (BS) of the cement (CMT);
- feeding the base (BS) into a grinding mill (12);
- milling (F3) the base (BS);
- providing a primary additional component (CAP), based on calcium sulphate;
- providing a secondary additional component (CAS);
- mixing the primary additional component (CAP) and the secondary additional component (CAS) into the base (BS) to form the cement (CMT),
- milling the primary additional component (CAP), the secondary additional component (CAS) and the base (BS) to grind it to a medium cement particle size which is smaller than a predetermined particle size;
- sieving the milled primary additional component (CAP), secondary additional component (CAS) and base (BS) to allow component particles smaller in size than the predetermined particle size to pass through,
**characterized in that** the secondary additional component (CAS) comprises ceramic material derived from the processing of ceramic tiles.

2. The method (M) according to claim 1, wherein the secondary additional component (CAS) is at least partly mixed in the form of return sludge (FDR) having a predetermined moisture content and in which the ceramic material is dispersed.

3. The method (M) according to claim 2, wherein the predetermined moisture content is less than 40% by volume.

4. The method (M) according to claim 3, wherein the moisture content is in a range between 5% and 20% by volume.

5. The method (M) according to any one of claims 2 to 4, comprising a step of regulating (F4) the moisture in the return sludge (FDR) to obtain the predetermined moisture content starting from a return moisture content, wherein the step of regulating (F4) comprises the following steps:
- adding dry ceramic material (PVS) to the return sludge (FDR);
- mixing the return sludge (FDR) into the dry ceramic material (PVS) to reduce the moisture content of the return sludge (FDR) to the predetermined moisture content.

6. The method (M) according to claim 5, wherein the step of regulating (F4) comprises a step of removing water from the return sludge (FDR) through one or more of the following steps:
- drying the return sludge (FDR) by exposure to open air;
- drying the return sludge (FDR) by exposure to controlled ventilation;
- drying the return sludge (FDR) by exposure to controlled temperature;
- filtering the return sludge (FDR);
- filter pressing the return sludge (FDR).

7. The method (M) according to any one of the preceding claims, wherein the secondary additional component (CAS) is fed at least partly in the form of dry ceramic material (PVS).

8. The method (M) according to any one of the preceding claims, comprising the following steps:
- providing (F41) secondary additional component (CAS) in the form of dry ceramic material (PVS);
- providing (F42) secondary additional component (CAS) in the form of return sludge (FDR) having a return moisture content;
- detecting (F43) the return moisture content via a moisture sensor (134);
- determining (F44) a corrective quantity (QC) of dry ceramic material (PVS) to be added to the return sludge (FDR) to reduce the return moisture content to a predetermined moisture content;
- feeding (F45) the corrective quantity (QC) of dry ceramic material (PVS) and the return sludge (FDR) into a mixer (133) to obtain return sludge (FDR) having the predetermined moisture content.

9. The method according to any one of the preceding claims, wherein the raw materials are calcium carbonate (CC) and clay (AR).

10. The method according to any one of the preceding claims, wherein the primary additional component (CAP) and the secondary additional component (CAS) are mixed into the base (BS) inside the grinding mill (12) to bring them to a predetermined particle size.

11. The method according to any one of the preceding claims, wherein the ceramic material is derived from ceramic tiles prior to their consumer use.

12. An apparatus (100) for the production of cement (CMT), comprising:
- a homogenizer (10) configured for mixing raw materials to form a first mixed composite (PCM);
- a kiln (11) configured for firing the first mixed composite (PCM) to form a base (BS) of the cement (CMT);
- a grinding mill (12) configured to be fed with the base (BS) to grind it to a predetermined particle size and configured to mix a calcium sulphate based primary additional component (CAP), and a secondary additional component (CAS) into the base (BS);
- a sieving element, configured to sieve the milled primary additional component (CAP), secondary additional component (CAS) and base (BS) to allow component particles smaller in size than the predetermined particle size to pass through,
- a storage unit (131, 132), containing ceramic material derived from the processing of ceramic tiles, in the form of return sludge (FDR) and/or dry ceramic material (PVS), said dry ceramic material being used as at least part of the secondary additional component (CAS).

13. The apparatus (100) according to claim 12, wherein the storage unit (131, 132) comprises a first container (131), configured to contain return sludge (FDR), and a second container (132), configured to contain dry ceramic material (PVS), and a mixer (133), configured to receive return sludge (FDR) and dry ceramic material (PVS) and to mix them therein, wherein the apparatus (100) comprises:
- a moisture sensor (134), configured to detect the moisture of the return sludge in the first container (131) and to generate a moisture signal (SU);
- an extractor (135), configured for extracting dry ceramic material from the second container (132) and sending it to the mixer (133);
- a pump (136) configured for pumping a quantity of return sludge (FDR) from the first container (131) to the mixer (133);
a control unit (14), configured for:
calculating a quantity of corrective ceramic material (QC), based on the quantity of return sludge (FDR) pumped into the mixer (133) and on the moisture signal (SU);
generating a command signal, representing the quantity of corrective ceramic material (QC);
sending the command signal to the extractor (135), to instruct it to feed the mixer (133) with the quantity of corrective ceramic material (QC).

## Patentansprüche

1. Verfahren (M) zur Herstellung von Zement (CMT), umfassend die folgenden Schritte:
- Mischen (F1) von Rohstoffen in einem Homogenisator (10), um einen ersten gemischten Verbundstoff (PCM) zu bilden;
- Brennen (F2) des ersten gemischten Verbundstoffs (PCM) in einem Ofen (11), um eine Basis (BS) des Zements (CMT) zu bilden;
- Zuführen der Basis (BS) in eine Mahlmühle (12);
- Zermahlen (F3) der Basis (BS);
- Bereitstellen einer primären Zusatzkomponente (CAP) auf Basis von Calciumsulfat;
- Bereitstellen einer sekundären Zusatzkomponente (CAS);
- Einmischen der primären Zusatzkomponente (CAP) und der sekundären Zusatzkomponente (CAS) in die Basis (BS) zur Bildung des Zements (CMT),
- Zermahlen der primären Zusatzkomponente (CAP), der sekundären Zusatzkomponente (CAS) und der Basis (BS), um sie auf eine mittlere Zementpartikelgröße zu mahlen, die kleiner als eine vorbestimmte Partikelgröße ist;
- Sieben der zermahlenen primären Zusatzkomponente (CAP), der sekundären Zusatzkomponente (CAS) und der Basis (BS), um den Durchtritt von Komponentenpartikeln zu ermöglichen, die kleiner als die vorbestimmte Partikelgröße sind, **dadurch gekennzeichnet, dass** die sekundäre Zusatzkomponente (CAS) Keramikmaterial umfasst, das aus der Verarbeitung von Keramikfliesen stammt.

2. Verfahren (M) nach Anspruch 1, wobei die sekundäre Zusatzkomponente (CAS) zumindest teilweise in Form von Rücklaufschlamm (FDR) mit einem vorbestimmten Feuchtigkeitsgehalt gemischt wird und in dem das Keramikmaterial dispergiert ist.

3. Verfahren (M) nach Anspruch 2, wobei der vorbestimmte Feuchtigkeitsgehalt weniger als 40 Vol.- % beträgt.

4. Verfahren (M) nach Anspruch 3, wobei der Feuchtigkeitsgehalt in einem Bereich zwischen 5 Vol.- % und 20 Vol.- % liegt.

5. Verfahren (M) nach einem der Ansprüche 2 bis 4, umfassend einen Schritt zum Regulieren (F4) der Feuchtigkeit in dem Rücklaufschlamm (FDR), um den vorbestimmten Feuchtigkeitsgehalt ausgehend von einem Rücklauffeuchtigkeitsgehalt zu erhalten, wobei der Schritt zum Regulieren (F4) die folgenden Schritte umfasst:
- Zugeben von trockenem Keramikmaterial (PVS) zum Rücklaufschlamm (FDR);
- Einmischen des Rücklaufschlamms (FDR) in das trockene Keramikmaterial (PVS), um den Feuchtigkeitsgehalt des Rücklaufschlamms (FDR) auf den vorbestimmten Feuchtigkeitsgehalt zu reduzieren.

6. Verfahren (M) nach Anspruch 5, wobei der Schritt zum Regulieren (F4) einen Schritt zum Entfernen von Wasser aus dem Rücklaufschlamm (FDR) durch einen oder mehrere der folgenden Schritte umfasst:
- Trocknen des Rücklaufschlamms (FDR) durch Exposition gegenüber frischer Luft;
- Trocknen des Rücklaufschlamms (FDR) durch Exposition gegenüber kontrollierter Belüftung;
- Trocknen des Rücklaufschlamms (FDR) durch Exposition gegenüber kontrollierter Temperatur;
- Filtern des Rücklaufschlamms (FDR);
- Filtern, indem der Rücklaufschlamm (FDR) gedrückt wird.

7. Verfahren (M) nach einem der vorhergehenden Ansprüche, wobei die sekundäre Zusatzkomponente (CAS) zumindest teilweise in Form von trockenem Keramikmaterial (PVS) zugeführt wird.

8. Verfahren (M) nach einem der vorhergehenden Ansprüche, umfassend die Schritte von:
- Bereitstellen (F41) einer sekundären Zusatzkomponente (CAS) in Form von trockenem Keramikmaterial (PVS);
- Bereitstellen (F42) einer sekundären Zusatzkomponente (CAS) in Form von Rücklaufschlamm (FDR) mit einem Rücklauffeuchtigkeitsgehalt;
- Erfassen (F43) des Rücklauffeuchtigkeitsgehalts über einen Feuchtigkeitssensor (134);
- Bestimmen (F44) einer Korrekturmenge (QC) von trockenem Keramikmaterial (PVS), das dem Rücklaufschlamm (FDR) zugesetzt werden soll, um den Rücklauffeuchtigkeitsgehalt auf einen vorbestimmten Feuchtigkeitsgehalt zu reduzieren;
- Zuführen (F45) der Korrekturmenge (QC) des trockenen Keramikmaterials (PVS) und des Rücklaufschlamms (FDR) in einen Mischer (133), um Rücklaufschlamm (FDR) mit dem vorbestimmten Feuchtigkeitsgehalt zu erhalten.

9. Verfahren nach einem der vorhergehenden Ansprüche, wobei die Rohstoffe Calciumcarbonat (CC) und Ton (AR) sind.

10. Verfahren nach einem der vorhergehenden Ansprüche, wobei die primäre Zusatzkomponente (CAP) und die sekundäre Zusatzkomponente (CAS) in die Basis (BS) innerhalb der Mahlmühle (12) gemischt werden, um sie auf eine vorbestimmte Partikelgröße zu bringen.

11. Verfahren nach einem der vorhergehenden Ansprüche, wobei das Keramikmaterial vor seiner Verwendung durch den Verbraucher aus Keramikfliesen stammt.

12. Vorrichtung (100) zur Herstellung von Zement (CMT), umfassend:
- einen Homogenisator (10), der zum Mischen von Rohmaterialien ausgelegt ist, um einen ersten gemischten Verbundstoff (PCM) zu bilden;
- einen Ofen (11), der zum Brennen des ersten gemischten Verbundstoffs (PCM) ausgelegt ist, um eine Basis (BS) des Zements (CMT) zu bilden;
- eine Mahlmühle (12), die ausgelegt ist, um mit der Basis (BS) versorgt zu werden, um sie auf eine vorbestimmte Partikelgröße zu mahlen, und ausgelegt ist, um eine primäre Zusatzkomponente (CAP) auf Calciumsulfatbasis und eine sekundäre Zusatzkomponente (CAS) in die Basis (BS) zu mischen;
- ein Siebelement, das so ausgelegt ist, dass es die zermahlene primäre Zusatzkomponente (CAP), die sekundäre Zusatzkomponente (CAS) und die Basis (BS) siebt, um den Durchtritt von Komponentenpartikeln zu ermöglichen, die kleiner als die vorbestimmte Partikelgröße sind,
- eine Speichereinheit (131, 132), die Keramikmaterial enthält, das aus der Verarbeitung von Keramikfliesen stammt, in Form von Rücklaufschlamm (FDR) und/oder trockenem Keramikmaterial (PVS), wobei das trockene Keramikmaterial als zumindest ein Teil der sekundären Zusatzkomponente (CAS) verwendet wird.

13. Vorrichtung (100) nach Anspruch 12, wobei die Speichereinheit (131, 132) einen ersten Behälter (131), der so ausgelegt ist, dass er Rücklaufschlamm (FDR) enthält, und einen zweiten Behälter (132), der so ausgelegt ist, dass er trockenes Keramikmaterial (PVS) enthält, und einen Mischer (133) umfasst, der so ausgelegt ist, dass er Rücklaufschlamm (FDR) und trockenes Keramikmaterial (PVS) aufnimmt und darin mischt, wobei die Vorrichtung (100) umfasst:
- einen Feuchtigkeitssensor (134), der ausgelegt ist, um die Feuchtigkeit des Rücklaufschlamms in dem ersten Behälter (131) zu erfassen und ein Feuchtigkeitssignal (SU) zu erzeugen;
- einen Extraktor (135), der ausgelegt ist, um trockenes Keramikmaterial aus dem zweiten Behälter (132) zu extrahieren und an den Mischer (133) zu senden;
- eine Pumpe (136), die zum Pumpen einer Menge an Rücklaufschlamm (FDR) aus dem ersten Behälter (131) in den Mischer (133) ausgelegt ist;
eine Steuereinheit (14), die zu Folgendem ausgelegt ist:
Berechnen einer Menge an Korrekturkeramikmaterial (QC) auf Grundlage der Menge an Rücklaufschlamm (FDR), der in den Mischer (133) gepumpt wird, und auf Grundlage des Feuchtigkeitssignals (SU);
Erzeugen eines Befehlssignals, das die Menge an Korrekturkeramikmaterial (QC) darstellt;
Senden des Befehlssignals an den Extraktor (135), um ihn anzuweisen, den Mischer (133) mit der Menge an Korrekturkeramikmaterial (QC) zu versorgen.

## Revendications

1. Procédé (M) pour la production de ciment (CMT), comprenant les étapes suivantes :
- mélanger (F1) des matières premières dans un homogénéisateur (10) pour former un premier composite mélangé (PCM) ;
- cuire (F2) le premier composite mélangé (PCM) dans un four (11) pour former une base (BS) du ciment (CMT) ;
- alimenter la base (BS) dans un broyeur (12) ;
- broyer (F3) la base (BS) ;
- fournir un composant complémentaire principal (CAP), à base de sulfate de calcium ;
- fournir un composant complémentaire secondaire (CAS) ;
- mélanger le composant complémentaire principal (CAP) et le composant complémentaire secondaire (CAS) à la base (BS) pour former le ciment (CMT),
- broyer le composant complémentaire principal (CAP), le composant complémentaire secondaire (CAS) et la base (BS) pour les broyer jusqu'à obtenir une granulométrie moyenne de ciment inférieure à une granulométrie prédéterminée ;
- cribler le composant complémentaire principal (CAP), le composant complémentaire secondaire (CAS) et la base (BS) broyés afin de laisser passer les particules de taille inférieure à la taille prédéterminée, **caractérisé en ce que** le composant complémentaire secondaire (CAS) comprend un matériau céramique dérivé du traitement de carreaux de céramique.

2. Procédé (M) selon la revendication 1, dans lequel le composant complémentaire secondaire (CAS) est au moins partiellement mélangé sous forme de boues de retour (FDR) présentant une teneur en humidité prédéterminée et dans lesquelles le matériau céramique est dispersé.

3. Procédé (M) selon la revendication 2, dans lequel la teneur en humidité prédéterminée est inférieure à 40 % en volume.

4. Procédé (M) selon la revendication 3, dans lequel la teneur en humidité se situe dans une plage comprise entre 5 et 20 % en volume.

5. Procédé (M) selon l'une quelconque des revendications 2 à 4, comprenant une étape de régulation (F4) de l'humidité dans les boues de retour (FDR) afin d'obtenir la teneur en humidité prédéterminée à partir d'une teneur en humidité initiale, dans lequel l'étape de régulation (F4) comprend les étapes suivantes :
- ajouter du matériau céramique sec (PVS) aux boues de retour (FDR) ;
- mélanger les boues de retour (FDR) au matériau céramique sec (PVS) afin de réduire la teneur en humidité des boues de retour (FDR) jusqu'à la teneur en humidité prédéterminée.

6. Procédé (M) selon la revendication 5, dans lequel l'étape de régulation (F4) comprend une étape consistant à éliminer l'eau des boues de retour (FDR) par l'une ou plusieurs des étapes suivantes :
- sécher les boues de retour (FDR) par exposition à l'air libre ;
- sécher les boues de retour (FDR) par exposition à une ventilation contrôlée ;
- sécher les boues de retour (FDR) par exposition à une température contrôlée ;
- filtrer les boues de retour (FDR) ;
- presser les boues de retour (FDR) à l'aide d'un filtre-presse.

7. Procédé (M) selon l'une quelconque des revendications précédentes, dans lequel le composant complémentaire secondaire (CAS) est alimenté au moins en partie sous forme de matériau céramique sec (PVS).

8. Procédé (M) selon l'une quelconque des revendications précédentes, comprenant les étapes suivantes :
- fournir (F41) le composant complémentaire secondaire (CAS) sous forme de matériau céramique sec (PVS) ;
- fournir (F42) le composant complémentaire secondaire (CAS) sous forme de boues de retour (FDR) présentant une teneur en humidité de retour ;
- détecter (F43) la teneur en humidité de retour à l'aide d'un capteur d'humidité (134) ;
- déterminer (F44) une quantité correctrice (QC) de matériau céramique sec (PVS) à ajouter aux boues de retour (FDR) afin de ramener la teneur en humidité de retour à une teneur en humidité prédéterminée ;
- alimenter (F45) la quantité correctrice (QC) de matériau céramique sec (PVS) et les boues de retour (FDR) dans un mélangeur (133) afin d'obtenir des boues de retour (FDR) présentant la teneur en humidité prédéterminée.

9. Procédé selon l'une quelconque des revendications précédentes, dans lequel les matières premières sont le carbonate de calcium (CC) et l'argile (AR).

10. Procédé selon l'une quelconque des revendications précédentes, dans lequel le composant complémentaire principal (CAP) et le composant complémentaire secondaire (CAS) sont mélangés à la base (BS) à l'intérieur du broyeur (12) afin de les amener à une granulométrie prédéterminée.

11. Procédé selon l'une quelconque des revendications précédentes, dans lequel le matériau céramique est dérivé de carreaux de céramique avant leur utilisation par les consommateurs.

12. Appareil (100) pour la production de ciment (CMT), comprenant :
- un homogénéisateur (10) conçu pour mélanger des matières premières afin de former un premier composite mélangé (PCM) ;
- un four (11) conçu pour cuire le premier composite mélangé (PCM) afin de former une base (BS) du ciment (CMT) ;
- un broyeur (12) conçu pour être alimenté avec la base (BS) afin de la broyer jusqu'à une granulométrie prédéterminée, et conçu pour mélanger à la base (BS) un composant complémentaire principal (CAP) à base de sulfate de calcium et un composant complémentaire secondaire (CAS) ;
- un élément de criblage, conçu pour cribler le composant complémentaire principal (CAP) broyé, le composant complémentaire secondaire (CAS) et la base (BS) afin de laisser passer les particules de taille inférieure à la granulométrie prédéterminée,
- une unité de stockage (131, 132), contenant un matériau céramique issu du traitement de carreaux de céramique, sous forme de boues de retour (FDR) et/ou de matériau céramique sec (PVS), ledit matériau céramique sec étant utilisé comme au moins une partie du composant complémentaire secondaire (CAS).

13. Appareil (100) selon la revendication 12, dans lequel l'unité de stockage (131, 132) comprend un premier contenant (131), conçu pour contenir des boues de retour (FDR), et un second contenant (132), conçu pour contenir du matériau céramique sec (PVS), ainsi qu'un mélangeur (133), conçu pour recevoir les boues de retour (FDR) et le matériau céramique sec (PVS) et pour les mélanger en son sein, dans lequel l'appareil (100) comprend :
- un capteur d'humidité (134), conçu pour détecter l'humidité des boues de retour dans le premier contenant (131) et pour générer un signal d'humidité (SU) ;
- un extracteur (135), conçu pour extraire le matériau céramique sec du second contenant (132) et l'envoyer vers le mélangeur (133) ;
- une pompe (136), conçue pour pomper une quantité de boues de retour (FDR) du premier contenant (131) vers le mélangeur (133) ;
une unité de commande (14), configurée pour :
calculer une quantité corrigée (QC) de matériau céramique, sur la base de la quantité de boues de retour (FDR) pompée dans le mélangeur (133) et du signal d'humidité (SU) ;
générer un signal de commande représentant la quantité corrigée (QC) de matériau céramique ;
envoyer le signal de commande à l'extracteur (135) afin de lui ordonner d'alimenter le mélangeur (133) avec la quantité corrigée (QC) de matériau céramique.
